Europäisches Patentamt

European Patent Office

Office européen des brevets

(11) Veröffentlichungsnummer: **0 224 663**

**A2**

(12) **EUROPÄISCHE PATENTANMELDUNG**

(21) Anmeldenummer: 86112423.8

(22) Anmeldetag: 08.09.86

(51) Int. Cl.⁴: **B60G 17/04**

(30) Priorität: 05.12.85 DE 3542974

(43) Veröffentlichungstag der Anmeldung:
10.06.87 Patentblatt 87/24

(84) Benannte Vertragsstaaten:
**DE IT SE**

(71) Anmelder: **WABCO Westinghouse
Fahrzeugbremsen GmbH
Am Lindener Hafen 21 Postfach 91 12 80
D-3000 Hannover 91(DE)**

(72) Erfinder: **Kaltenthaler,Wolfgang,Dipl.-Ing.
Töpferweg 19
D-3015 Wennigsen 4(DE)**
Erfinder: **Schönfeld, Karl-Heinrich, Dr. Ing.
Boschweg 14
D-3016 Seelze 2(DE)**

(74) Vertreter: **Schrödter, Manfred
WABCO Westinghouse Fahrzeugbremsen
GmbH Am Lindener Hafen 21 Postfach 91 12
80
D-3000 Hannover 91(DE)**

(54) **Niveauregeleinrichtung für Fahrzeuge mit Luftfedern.**

(57) Niveauregeleinrichtung für Fahrzeuge mit Luftfedern mit der in Abhängigkeit von der Fahrzeugbelastung ein vorgegebener Abstand der Fahrzeugzelle von der Fahrzeugachse durch Auffüllen oder Entleeren der Luftfedern aufrecht erhalten werden kann. Die Einrichtung enthält ein mit dem Druck in den Luftfedern steuerbares Sicherheitsventil. Bei einer Überladung des Fahrzeugs, oder bei einem Defekt der Steuereinrichtung der Niveauregeleinrichtung, begrenzt das Sicherheitsventil den Druck in den Luftfedern auf einen vorgegebenen maximalen Druck

Fig.1

## Niveauregeleinrichtung für Fahrzeuge mit Luftfedern

Die Erfindung betrifft eine Niveauregeleinrichtung für Fahrzeuge mit Luftfedern gemäß dem Oberbegriff des Patentanspruchs 1.

Bei luftgefederten Fahrzeugen wird vorwiegend eine lastabhängige Niveauregelung verwendet. Dabei wird die Luftmenge in den Federbälgen der Luftfederung in Abhängigkeit von der Fahrzeugbelastung so geregelt, daß ein vorgegebener Abstand der Fahrzeugzelle von der Fahrzeugachse immer gleich ist.

Eine Einrichtung der eingangs genannten Art ist durch die DE-OS 30 31 453 vorbekannt. Diese bekannte Einrichtung besteht im wesentlichen aus folgenden Teilen:

Eine Wegmeßeinrichtung mißt den durch Be- oder Entlasten des Fahrzeuges sich verändernden Abstand der Fahrzeugzelle von der Fahrzeugachse. Die Meßdaten werden mittels einer elektronischen Auswerteschaltung mit einem Sollwert (Normalniveau) verglichen. Bei Abweichung wird das Normalniveau durch Be-oder Entlüften der Luftfedern wieder hergestellt. Zum Auffüllen der Luftfedern schaltet die Elektronik ein Luftfederventil zwischen der Druckmittelquelle und den Luftfedern auf Durchgang und veranlaßt die Druckmittelquelle Luft in die Luftfedern zu fördern, bis die Elektronik das von der Wegmeßeinrichtung gemeldete Normalniveau erkennt. Die Luftförderung wird daraufhin abgestellt und das Luftfederventil geschlossen. Das Entleeren der Luftfedern geschieht in der Weise, daß die Elektronik das Luftfederventil und ein zweites, zur Atmosphäre hin öffnendes Entlüftungsventil auf Durchgang schaltet. Die Luftfedern werden dann so lange in die Atmosphäre entleert, bis die Ekektronik bei Erkennen des Normalniveaus beide Ventile absperrt.

Die vorbekannte Einrichtung hat den Nachteil, daß auch bei einem Absenken der Fahrzeugzelle infolge einer an sich unerlaubten Überladung und damit Überlastung des Fahrzeugs die Druckmittelquelle von der Wegmeßeinrichtung und der Elektronik veranlaßt wird, das Normalniveau wieder herzustellen, d. h. Luft in die Bälge der Luftfedern zu fördern, obgleich diese durch die Überladung des Fahrzeugs bereits einen entsprechend hohen Luftdruck aufweisen. Die solchermaßen mit einem Überdruck aufgefüllten Luftfedern werden im Fahrbetrieb zusätzlich durch dynamische Druckspitzen belastet, so daß es hierdurch zu Schäden an den Luftfederbälgen kommen kann. Auch Schaltfehler, hervorgerufen z. B. durch eine defekte Wegmeßeinrichtung und/oder Elektronik, derart, daß die Druckmittelquelle nicht abgeschaltet wird, können zu einem unkontrolliertem Druckanstieg in den Luftfederbälgen und damit zu den erwähnten Schäden führen.

Der Erfindung liegt daher die Aufgabe zugrunde, die Einrichtung der eingangs genannten Art so zu verbessern, daß bei jedem Belastungszustand des Fahrzeuges und bei Schaltfehlern in der Niveauregelanlage ein vorgegebener Maximaldruck in den Bälgen der Luftfedern nicht überschritten werden kann.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß bei Überlastung des Fahrzeugs die Fahrzeugzelle auf einen festen Anschlag des Fahrgestells zur Auflage kommen kann und in diesem Zustand bei einem von der Wegmeßeinrichtung erkannten "Niedrigniveau" und demzufolge eingeschalteter Druckmittelquelle der vorgegebene Maximaldruck in den Bälgen der Luftfederung nicht überschritten wird.

Ein weiterer Vorteil ergibt sich, wenn die Niveauregeleinrichtung mit einem Lufttrockner ausgerüstet ist, der beim Auffüllen der Luftfedern in der Trocknungsphase und beim Entleeren der Luftfedern, d. h. beim Absenken der Fahrzeugzelle, in der Regenerierungsphase betrieben wird.

Die von den Luftfedern auch bei einer Überladung des Fahrzeuges abströmende Luft kann dann ebenfalls zur Regenerierung des Lufttrockners durch den Lufttrockner hindurch geleitet werden. Hierdurch ergibt sich eine maximale Nutzung der beim Absenken der Fahrzeugzelle oder bei einer Überladung des Fahrzeugs von den Luftfedern abströmenden Luft für die Regenerierung des Lufttrockners.

Die Erfindung wird anhand eines Ausführungsbeispiels, das in der Zeichnung dargestellt ist, näher erläutert.

Es zeigen:

Fig. 1 und Fig. 2 eine Niveauregeleinrichtung mit einem in die Atmosphäre entlüftenden Überlastventil,

Fig. 3 und Fig. 4 eine Niveauregeleinrichtung nach Fig. 1 mit einem in den Druckmittelkreis integrierten Überlastventil,

Fig. 5 und Fig. 6 eine Niveauregeleinrichtung nach Fig. 1 mit einem als Überlastventil wirkenden Luftfederventil,

Fig. 7 eine Niveauregeleinrichtung nach Fig. 1 mit einer von der Elektronik der Niveauregeleinrichtung gesteuerten Überlasteinrichtung.

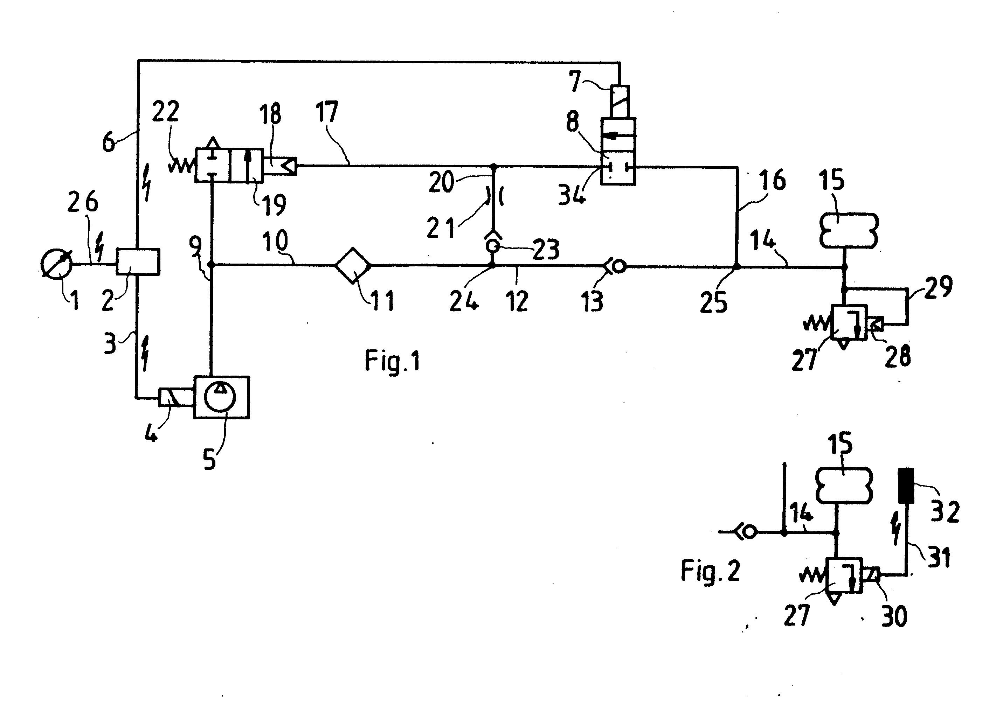

Gemäß Fig. 1 ist eine Luftfeder 15, die symbolisch dargestellt ist und alle übrigen Luftfedern des Fahrzeugs einschließt, zum Auffüllen mit einer Druckmittelquelle 5 und zum Entleeren mit einem ersten pneumatisch steuerbaren und in die Atmosphäre entlüftenden Wegeventil 19 verbindbar. Das erste Wegeventil 19 hat einen pneumatischen Steuereingang 18, der über ein zweites steuerbares als Luftfederventil dienendes Wegeventil 8 mit einem dem Druck in der Luftfeder 15 bestimmenden Steuerdruck gegen eine auf den pneumatischen Steuereingang 18 wirkende Rückstellkraft 22 beaufschlagbar ist.

Ein Lufttrockner 11 ist einerseits über ein zur Luftfeder 15 hin öffnendes erstes Rückschlagventil 13 und andererseits über ein zum Lufttrockner 11 hin öffnendes zweites Rückschlagventil 23 und über das Wegeventil 8 mit der Luftfeder 15 verbindbar. Dem zweiten Rückschlagventil 23 ist eine Drossel 21 vorgeschaltet, über die das zweite Rückschalgventil 23 mit einem Druckmittelausgang 34 des zweiten Wegeventils 8 verbunden ist.

Der pneumatische Steuereingang 18 des ersten Wegeventils 19 ist an die die Drossel 21 und an eine den Druckmittelausgang 34 des zweiten Wegeventils 8 verbindende Leitung angeschlossen.

Eine Wegmeßeinrichtung 1, die den Abstand - (das Niveau) der Fahrzeugzelle von der Fahrzeugachse mißt, ist über eine elektrische Leitung 26 mit einer elektronischen Steuereinheit 2 verbunden. In die elektronische Steuereinheit 2 ist eine Auswerteschaltung mit einem Sollwert, der einem vorgegebenen Normalniveau entspricht, integriert. Das von der Wegmeßeinrichtung 1 gemessene Niveau wird mit dem in der Auswerteschaltung gespeicherten und gegebenenfalls veränderbaren Normalniveau verglichen. Von der elektronischen Steuereinheit 2 werden entsprechend dem Niveauvergleich elektrische Steuersignale entweder über eine elektrische Leitung 3 auf einen elektrischen Steueranschluß 4 der Druckmittelquelle 5 oder über eine elektrische Leitung 6 auf einen elektrischen Steueranschluß 7 des Wegeventils 8 gegeben.

Liegt der Meßwert unterhalb des Normalniveaus, dann wird von der elektronischen Steuereinheit 2 die Druckmittelquelle 5 eingeschaltet. Der Luftfeder 15 wird über eine Druckleitung 9, 10, über den Lufttrockner 11, eine Druckleitung 12, das Rückschlagventil 13 und eine Druckleitung 14 Luft zugeführt, bis das Normalniveau erreicht ist und die elektronische Steuereinheit 2 die Druckmittelquelle 5 wieder ausschaltet.

Bei einem Meßwert oberhalb des Normalniveaus wird die Luftfeder 15 bei abgeschalteter Druckmittelquelle 5 in die Atmosphäre entleert bis das Normalniveau erreicht ist. Von der elektronischen Steuereinheit 2 wird dazu das Luftfederventil 8 aus der Sperrstellung in die Durchgangsstellung geschaltet. Das dadurch von der Luftfeder 15 abströmende Druckmittel gelangt über die Druckleitungen 14, 16, 17 auf den pneumatischen Steuereingang 18 des Wegeventils 19, das daraufhin auf Durchgang zur Atmosphäre umschaltet.

Über die den Lufttrockner 11 und das zweite Wegeventil 8 verbindende Druckleitung 20 ist die Luftfeder 15 dann über die Druckleitung 10, 9 und das erste Wegeventil 19 mit der Atmosphäre verbunden, bis die Wegmeßeinrichtung 1 das Erreichen des vorgegebenen Normalniveaus signalisiert und die elektronische Steuereinheit 2 das Wegeventil 8 in die Sperrstellung zurückschaltet.

Die Druckleitung 9 ist während des Entleerens der luftfeder 15 gegenüber der abgeschalteten Druckmittelquelle 5 abgesperrt. Der am Steuereingang 18 des Wegeventils 19 wirksame Druck wird dann über die Verbindung 17, 20, 11, 10, 9 und das Wegeventil 19 soweit an den Atmosphärendruck angeglichen, bis die Rückstellkraft 22 das Wegeventil 19 in die Schließstellung bewegt.

Das in der Leitung 20 zwischen der Drossel 21 und dem Lufttrockner 11 angeordnete Rückschlagventil 23 sperrt während des Auffüllvorganges die Verbindung zum Steueranschluß 18 des Wegeventils 19. Das Wegeventil 19 wird dadurch gehindert, während der Auffüllphase in diejenige Stellung geschaltet zu werden, in der die Druckleitung 9 mit der Atmosphäre verbunden ist.

In der Druckleitung 12 befindet sich eine Leitungsverbindung 24 die die Druckleitung 12 mit der Druckleitung 20 verbindet. Die Druckleitungen 12, 14, 16 sind durch eine Leitungsverbindung 25 miteinander verbunden.

Das in der Leitung 12 zwischen den Leitungsverbindungen 24, 25 angeordnete Rückschlagventil 13 sperrt während des Entleerungsvorganges die Verbindung der Luftfeder 15 zum Lufttrockner 11.

Der Lufttrockner 11 wird beim Auffüllen der Luftfeder 15 im Trocknungsbetrieb und beim Entleeren der Luftfeder 15 im Regenerationsbetrieb betrieben. Ein hierzu geeigneter Lufttrockner ist in der DE-PS 19 47 550 beschrieben.

Die in der Druckleitung 20 angeordnete Drossel 21 sorgt während der Entleerungsphase dafür, daß einerseits dem Lufttrockner 11 entspannte Luft zugeführt wird und andererseits am Steuereingang 18 ein ungedrosselter Steuerdruck wirken kann.

Die Ventileinrichtung zum Entleeren der Luftfeder 15 in die Atmosphäre weist vorteilhaft ein drittes, als Sicherheitsventil gegen Überdruck in der Luftfederung wirkendes Wegeventil 27 auf, das mit einem dem Druck in der Luftfeder 15 entsprechenden Druck steuerbar ist. Die Entleerung der Luftfeder 15 über das dritte Wegeventil 27 erfolgt, sobald der Druck in der Luftfeder 15 eine Druckhöhe erreicht hat, die über einem vorgegebenen maximalen Betriebsdruck liegt.

Diese über dem maximalen Betriebsdruck liegende Druckhöhe stellt sich ein, wenn das Fahrzeug überladen und damit überlastet wird. Die Überlastung verursacht, wie auch die normale Zuladung innerhalb der verbestimmten zulässigen Lastgrenze, ein Absenken der Fahrzeugzelle. Die Wegmeßeinrichtung 1 registriert diese Veränderung der Niveaulage, erkennt jedoch nicht, daß diese Niveauänderung auf eine Überlastung des Fahrzeuges zurückzuführen ist. Die Wegmeßeinrichtung 1 veranlaßt demzufolge über die Elektronik 2 die Druckmittelquelle 5 Luft in die Luftfeder 15 zu fördern um das Normalniveau der Fahrzeugzelle wieder herzustellen. Hierdurch wird der in den Luftfedern 15 durch Überlastung des Fahrzeuges gestiegene Luftdruck weiter erhöht.

Dem Grad der Überlastung entsprechend, könnte in der Luftfeder 15 eine kritische Druckhöhe erreicht werden, die zu einem Schaden am Balg der Luftfeder 15 führen kann. Diese kritische Druckhöhe kann insbesondere im Fahrbetrieb erreicht werden, wenn infolge Überlastung der in der Luftfeder 15 über den maximalen Betriebsdruck angestiegene Druck durch dynamische Druckspitzen schlagartig erhöht wird.

Eine den vorgegebenen maximalen Betriebsdruck übersteigende Druckhöhe in der Luftfeder 15 kann auch durch Schaltfehler in der Niveauregelanlage erreicht werden, wenn z. B. durch einen Defekt an der Wegmeßeinrichtung 1 und/oder der Elektronik 2 die Druckmittelquelle 5 nicht abgeschaltet wird.

Das mit der Luftfeder 15 verbundene Wegeventil 27 hat einen Schaltpunkt der unterhalb des kritischen Druckes in der Luftfeder 15 liegt, so daß eine Reduzierung des Druckes in der Luftfeder 15 ausgelöst wird, bevor eine durch die beschriebenen Umstände mögliche Beschädigung der Luftfeder 15 erfolgen kann.

Gemäß Fig. 1 ist das Wegeventil 27 über die Leitung 14 mit der Luftfeder 15 verbunden. Das Wegeventil 27 hat einen pneumatischen Steuereingang 28 der mit dem in der Luftfeder 15 herrschenden Druck über eine Druckleitung 29 beaufschlagbar ist.

Gemäß einem in Fig. 2 dargestellten weiteren Ausführungsbeispiel hat das Wegeventil 27 einen elektrischen Steuereingang 30 der über eine elektrische Leitung 31 mit einem Drucksensor 32 verbunden ist. Der Drucksensor 32 mißt den in der Luftfeder 15 vorhandenen Druck und veranlaßt das Wegeventil 27 bei einem vorgegebenen Druck in der Luftfeder 15 eine Verbindung der Luftfeder 15 mit der Atmosphäre herzustellen. Dabei wird zwischen dem Drucksensor 32 und dem elektrischen Steuereingang 30 eine nicht dargestellte Einrichtung wirksam, die das Signal des Drucksensors 32 in einen Schaltstrom für den Steuereingang 30 verwandelt.

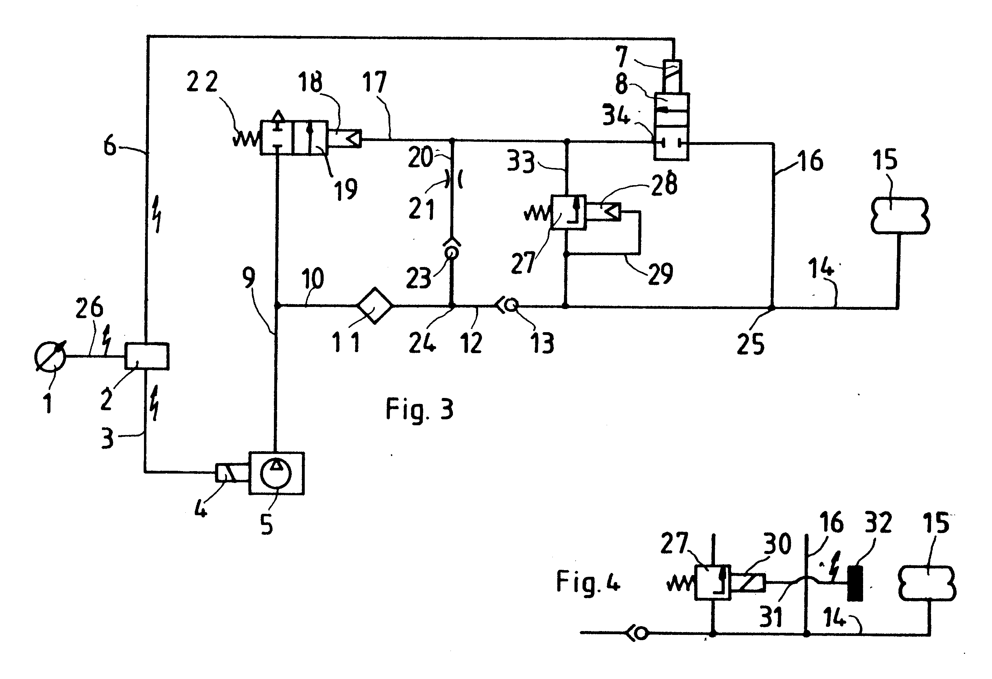

Gemäß Fig. 3 ist das Wegeventil 27 zwar wie unter Fig. 1 beschrieben, über die Leitung 14 mit der Luftfeder 15 verbunden, jedoch ist die Luftfeder 15 über das Wegeventil 27 und eine Druckleitung 33 mit der vom Druckausgang 34 des zweiten Wegeventils 8 zum Steuereingang 18 des ersten Wegeventils 19 führenden Druckleitung verbindbar.

Dies hat den Vorteil, daß die Luftfeder 15 über das erste Wegeventil 19, wie bei einem Meßwert der Wegmeßeinrichtung 1 oberhalb des Normalniveaus beschrieben, mit der Atmosphäre verbindbar ist. Hierdurch wird auch die über das Wegeventil 27 von der Luftfeder 15 abströmende Luft zur Regenerierung des Lufttrockners 11 verwendet.

Gemäß Fig. 4 ist das Wegeventil 27 wie auch unter Fig. 3 beschrieben angeordnet. Anstelle des pneumatischen Steuereingangs 28 ist jedoch entsprechend dem Ausführungsbeispiel gemäß Fig. 2 ein elektrischer Steuereingang 30 vorgesehen, der über die elektrische Leitung 31 mit dem den Druck in der Luftfeder 15 messenden Drucksensor 32 verbunden ist.

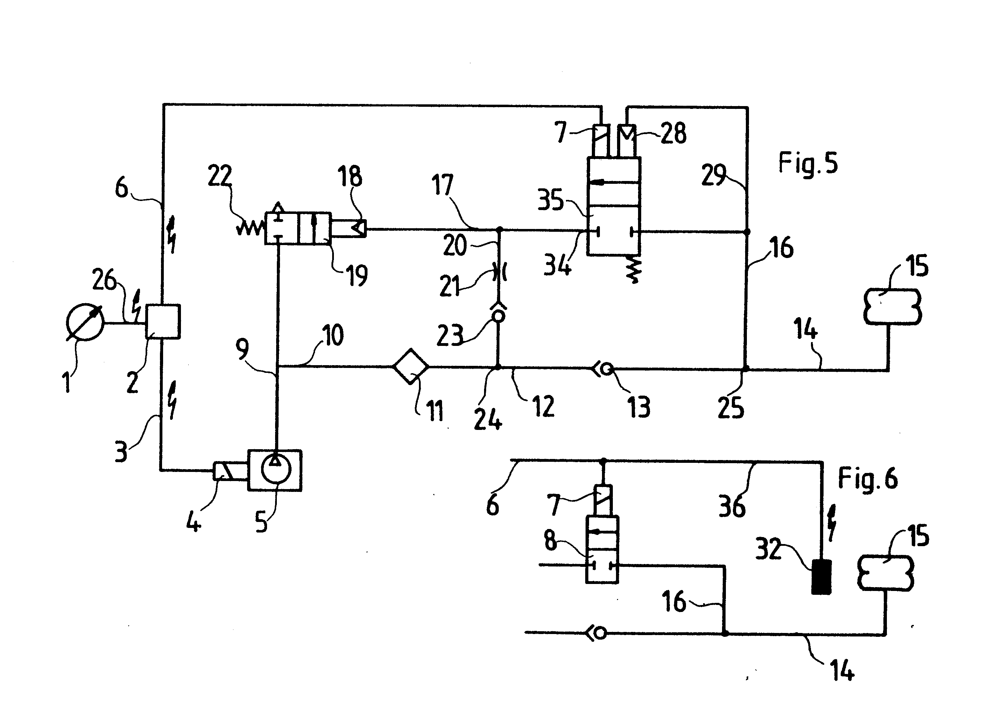

In dem Ausführungsbeispiel gemäß Fig. 5 sind das dritte Wegeventil 27 und das zweite Wegeventil 8 der Anordnung gemäß Fig. 1 zu einem Wegeventil 35 mit einem elektrischen Steuereingang 7 und einem pneumatischen Steuereingang 28 zusammengefaßt. Die Luftfeder 15 ist über das Wegeventil 35 mit dem pneumatischen Steuereingang 18 des ersten Wegeventils 19 und über den Lufttrockner 11 mit dem Auslaß zur Atmosphäre des ersten Wegeventils 19 verbindbar. Der elektrische Steuereingang 7 wird bei einer Niveauregelung im Sinne des Absenkens der Fahrzeugzelle durch die Wegmeßeinrichtung 1 und die Elektronik 2 angesteuert. Der pneumatische Steuereingang 28 wird über eine Druckleitung 29 von einem dem Druck in der Luftfeder 15 entsprechenden Druck im Sinne der erwähnten Überlastregelung angesteuert. Bei beiden, unabhängig voneinander folgenden Regelungsarten wird das Wegeventil 35 von der Sperrstellung in die Durchgangsstellung geschaltet, wodurch eine Verbindung von der Luftfeder 15 zum Steuereingang 18 und damit zum Auslaß des den Lufttrockner 11 mit der Atmosphäre verbindenden Wegeventils 19 hergestellt wird.

Gemäß Fig. 6 ist der elektrische Steuereingang 7 des zweiten Wegeventils 8 einerseits über die elektrische Leitung 6 mit der von der Wegmeßeinrichtung 1 ansteuerbaren Elektronik 2 und andererseits über eine elektrische Leitung 36 mit dem Drucksensor 32 verbunden. Bei einer nur prinzipiell dargestellten Ansteuerung des Steuereingangs 7 durch die Elektronik 2 oder durch den Drucksensor 32 wird das Wegeventil 8 von der Sperrstellung in die Durchgangsstellung geschaltet, wodurch jeweils die oben anhand der Fig. 5 beschriebene Entleerung der Luftfeder 15 erfolgt.

Das Ausführungsbeispiel nach Fig. 6 hat gegenüber den Ausführungsbeispielen nach Fig. 1 bis 5 den Vorteil des geringeren Aufwands, weil das zweite Wegeventil 8 nur einen elektrischen Steuereingang 7 aufweist der sowohl von der Wegmeßeinrichtung 1 als auch von dem Drucksensor 32 ansteuerbar ist.

Gemäß den Ausführungsbeispielen nach den Fig. 1 bis 6 ist die Druckmittelquelle 5 bei einer Überlastung des Fahrzeuges nicht abgeschaltet, weil die Wegmeßeinrichtung 1 in einem solchen Fall ein Niedrigniveau anzeigt, das durch Auffüllen der Luftfeder 15 auszugleichen wäre. Trotzdem ist die Druckmittelquelle 5 gegen eine Förderung, gegen einen unerwünschten Überdruck im System abgesichert, weil die Druckmittelquelle 5 wie auch die Luftfeder 15 an der durch den Überdruck in der Luftfeder 15 bewirkten Verbindung zur Atmosphäre über das erste Wegeventil 19 angeschlossen sind.

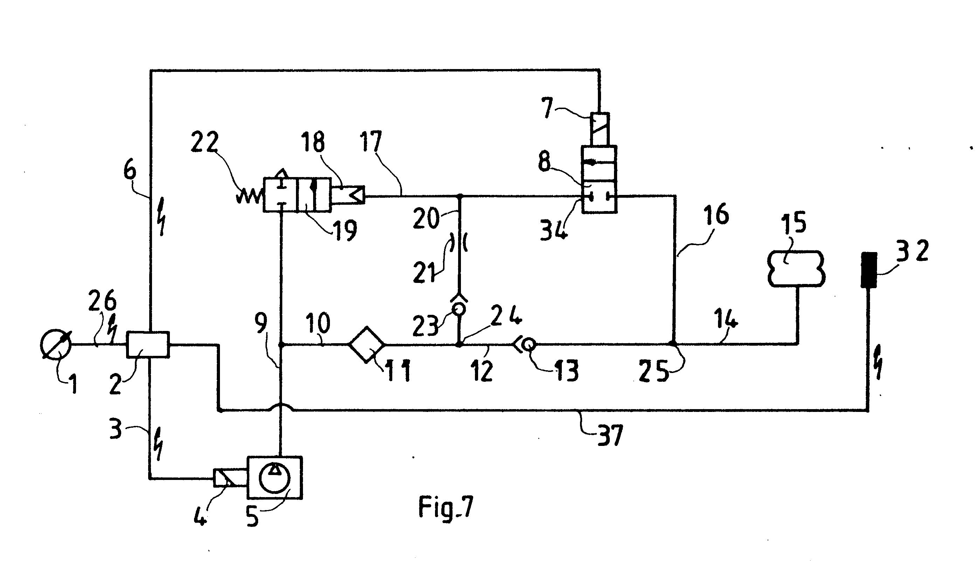

In dem Ausführungsbeispiel gemäß Fig. 7 ist der Drucksensor 32 über eine elektrische Leitung 37 mit der Elektronik 2 verbunden. In einer Soll-Instwert-Vergleichsschaltung der Elektronik 2 wird der von dem Drucksensor 32 signalisierte Druck in der Luftfeder 15 mit einem vorgegebenen Sollwert verglichen. Dieser Sollwert entspricht einem durch Überlasung des Fahrzeugs erreichten maximalen Druck in der Luftfeder 15 bei der der elektrische Steuereingang 7 des zweiten Wegeventils 8 über die elektrische Leitung 6 von der Elektronik 2 veranlaßt wird, das zweite Wegeventil 8 von der sperrstellung in die Durchgangsstellung zu schalten. Durch ein Oder-Glied der Elektronik 2 wird bei erreichen dieses Sollwertes ein elektrischer Steuereingang 4 der Druckmittelquelle 5 über eine elektrische Leitung 3 veranlaßt, die Druckmittelquelle 5 abzuschalten. Hierbei wird das von der Wegmeßeinrichtung 1 an die Elektronik 2 gegebene Signal, daß einem durch Überlastung des Fahrzeuges eintstandenen Niedrigniveau entspricht, in der Elektronik 2 unterdrückt.

Die Einrichtung gemäß Fig. 7 hat den Vorteil, daß durch Ausschalten der Druckmittelquelle 5 während der Überlastregelphase Energie eingespart wird.

Die beschriebene Einrichtung zum Schutz gegen Überschreitung eines vorgegebenen Maximaldruckes in der Luftfeder 15 kann auch in Niveauregeleinrichtungen verwendet werden, die nicht mit einem Lufttrockner ausgerüstet sind. Die aus der Luftfeder 15 abströmende Luft wird dann, wie in den Fig. 1 und 2 dargestellt, direkt in die Atmosphäre geleitet.

Die Sicherung der Luftfeder 15 gegen einen unerwünschten hohen Druckanstieg kann auch erreicht werden, wenn anstelle des in den Fig. 1 und 2 dargestellten Wegeventils 27 ein in der Druckleitung zwischen der Druckmittelquelle 5 und der Luftfeder 15 angeordnetes Druckbegrenzungsventil herkömmlicher Art verwendet wird (nicht dargestellt). Ein solches Druckbegrenzungsventil würde bei einem vorgegebenen Druck auf seiner Sekundärseite, der dem Druck in der Luftfeder 15 entsprechen würde, die Druckmittelquelle 5 gegenüber der LUftfeder 15 absperren. Die Druckmittelquelle 5 würde dann für die Dauer der Überlastung der Luftfeder 15 mit der Atmosphäre verbunden sein. Zwar würde bei einer solchen Einrichtung der Druck in der Luftfeder 15 proportional der Überladung des Fahrzeuges ansteigen, bis die Fahrzeugzelle auf einen festen Anschlag des Fahrgestells zur Auflage kommt, jedoch wäre ein weiterer Druckanstieg in der Luftfeder 15 nicht möglich, weil dann die Druckmittelquelle 5 in der beschriebenen Schaltstellung des Druckbegrenzungsventils mit der Atmosphäre verbunden ist.

## Ansprüche

1. Niveauregeleinrichtung für Fahrzeuge mit Luftfedern, durch die eine Fahrzeugzelle gegenüber mindestens einer Fahrzeugachse abgefedert ist, mit einer Steuereinrichtung in Verbindung mit einer Druckmittelquelle und mit einer Ventileinrichtung zum Heben und Senken der Fahrzeugzelle durch Auffüllen und Entleeren der Luftfeder, dadurch gekennzeichnet, daß die Ventileinrichtung ein Sicherheitsventil (27) aufweist, das mit einem dem Druck der Luftfeder (15) entsprechenden Druck steuerbar ist und durch das der Druck in der Luftfeder (15) reduzierbar ist.

2. Niveauregeleinrichtung nach Anspruch 1, dadurch gekennzeichnet, daß die Luftfeder (15) über das Sicherheitsventil (27) mit der Atmosphäre verbindbar ist. (Fig. 1, 2)

3. Niveauregeleinrichtung nach Anspruch 1, dadurch gekennzeichnet, daß das Sicherheitsventil (27) pneumatisch steuerbar ist und einen pneumatischen Steuereingang (28) aufweist, der mit einem dem Druck in der Luftfeder (15) entsprechenden Druck beaufschlagbar ist. (Fig. 1, 3)

4. Niveauregeleinrichtung nach Anspruch 1, dadurch gekennzeichnet, daß das Sicherheitsventil (27) elektrisch steuerbar ist und einen elektrischen Steuereingang (30) aufweist, der von einem dem Druck in der Luftfeder (15) messenden Drucksensor (32) ansteuerbar ist (Fig. 2, 4)

5. Niveauregeleinrichtung nach einem der vorhergehenden Ansprüche mit folgenden Merkmalen:

a) Die Ventileinrichtung weist ein zur Atmosphäre hin öffnendes erstes Wegeventil und ein die Luftfeder und das erste Wegeventil verbindendes zweites Wegeventil auf;

b) das zweite Wegeventil weist einen Steuereingang auf, der in Abhängigkeit von dem Abstand der Fahrzeugzelle von der Fahrzeugachse ansteuerbar ist;

c) zum Auffüllen der Luftfeder ist diese mit der Druckmittelquelle über einen im Trocknungsbetrieb betriebenen Lufttrockner verbindbar;

d) zum Entleeren der Luftfeder ist diese über den im Regenerationsbetrieb betriebenen Lufttrockner und das erste Wegeventil mit der Atmosphäre verbindbar, dadurch gekennzeichnet, daß die Luftfeder (15) durch das Sicherheitsventil (27) über den Lufttrockner (11) und das erste Wegeventil (19) mit der Atmosphäre verbindbar ist. (Fig. 3, 4)

6. Niveauregeleinrichtung nach Anspruch 5, dadurch gekennzeichnet, daß das erste Wegeventil (19) pneumatisch steuerbar ausgebildet ist, wobei der pneumatische Steuereingang (18) über das zweite Wegeventil (8) oder über das Sicherheitsventil (27) mit einem dem Druck der Luftfeder (15) entsprechenden Druck beaufschlagbar ist. (Fig. 3, 4)

7. Niveauregeleinrichtung nach Anspruch 5, dadurch gekennzeichnet, daß über das Sicherheitsventil (27) eine mit dem Innenraum der Luftfeder - (15) verbundene Druckleitung (14, 16) mit einer vom Druckausgang (34) des zweiten Wegeventils - (8) zum Steuereingang (18) des ersten Wegeventils (19) führenden Druckleitung (17) verbindbar ist. - (Fig. 3, 4)

8. Niveauregeleinrichtung nach Anspruch 5, dadurch gekennzeichnet, daß das Sicherheitsventil (27) und das zweite Wegeventil (8) zu einem Wegeventil (35) zusammengefaßt sind und daß das Wegeventil (35) in Abhängigkeit von dem Abstand der Fahrzeugzelle von der Fahrzeugachse einerseits und von einem den Druck in der Luftfeder - (15) entsprechenden Druck andererseits ansteuerbar ist. (Fig. 5)

9. Niveauregeleinrichtung nach Anspruch 8, dadurch gekennzeichnet, daß das Wegeventil (35) einen elektrischen Steuereingang (7) und einen pneumatischen Steuereingang (28) aufweist, wobei der elektrische Steuereingang (7) in Abhängigkeit von dem Abstand der Fahrzeugzelle von der Fahrzeugachse und der pneumatische Steuereingang - (28) von einem den Druck in der Luftfeder (15) entsprechenden Druck ansteuerbar ist. (Fig. 5)

10. Niveauregeleinrichtung nach Anspruch 5, dadurch gekennzeichnet, daß das zweite Wegeventil (8) einen elektrischen Steuereingang (7) aufweist, der von einem den Druck in der Luftfeder - (15) messenden Drucksensor (32) ansteuerbar ist. - (Fig. 6)

11. Niveauregeleinrichtung nach Anspruch 10, dadurch gekennzeichnet, daß der elektrische Steuereingang (7) des zweiten Wegeventils (8) von dem den Druck in der Luftfeder (15) messenden Drucksensor (32) über eine Soll-Istwert-Vergleichsschaltung einer Elektronik (2) ansteuerbar ist. (Fig. 7)

12. Niveauregeleinrichtung nach Anspruch 11, dadurch gekennzeichnet, daß die Elektronik (2) ein Oder-Glied aufweist durch welches die Druckmittelquelle (5) bei Ansteuerung des elektrischen Steuereingangs (7) durch den Drucksensor (32) über die Elektronik (2) abschaltbar ist.

13. Niveauregeleinrichtung nach Anspruch 1, dadurch gekennzeichnet, daß die Ventileinrichtung ein Druckbegrenzungsventil aufweist, das in der Druckleitung zwischen der Druckmittelquelle (5) und der Luftfeder (15) angeordnet ist, das mit einem dem Druck der Luftfeder (15) entsprechenden Druck steuerbar ist und durch das die Druckleitung zwischen der Druckmittelquelle 5 und der Luftfeder 15 zur Luftfeder (15) hin sperrbar ist.

Fig.1

Fig.2

Fig. 3

Fig. 4

0 224 663

WP 43/85

Fig.5

Fig.6

0 224 663

WP 43/85

Fig.7

WP 43185